# EUROPEAN PATENT SPECIFICATION

(11) **EP 1 101 319 B1**
(45) Date of publication and mention of the grant of the patent: **17.08.2005**
(21) Application number: 00935091.9
(22) Date of filing: 19.05.2000
(51) Int. Cl.: H04L 9/30

(54) **METHOD AND APPARATUS FOR SECURE CREATION OF PUBLIC/PRIVATE KEY PAIRS**
VERFAHREN IND VORRICHTUNG ZUR SICHEREN ERZEUGUNG VON ÖFFENTLICHEN/GEHEIMEN SCHLÜSSELPAAREN
PROCEDE ET APPAREIL DE CREATION SURE DE PAIRES DE CLES PUBLIQUES/PRIVEES

(30) Priority: 27.05.1999 US 320814
(43) Date of publication of application: 23.05.2001
(73) Proprietor: Koninklijke Philips Electronics N.V., 5621 BA Eindhoven (NL)
(72) Inventor: PASIEKA, Michael, S., NL-5656 AA Eindhoven (NL); EPSTEIN, Michael, NL-5656 AA Eindhoven (NL)
(74) Representative: Gravendeel, Cornelis
(86) International application number: PCT/EP2000/004623
(87) International publication number: WO 2000/074301

(56) References cited:
- US-A- 5 325 432
- US-A- 5 517 567

## Description

This invention relates to the field of cryptography, and in particular to the creation of public/private key pairs within a networked environment.

As the use of networked systems for communication of information increases, and potential access to such networked systems increases, the need for securing communications on the networked systems increases. A number of systems are currently available for encrypting and decrypting messages, and for certifying the originator of a message. An encryption technique that is commonly employed by such systems is one that is based on a public/private key pair technique, such as the RSA (Rivest, Shamir, Adleman) public-key cryptosystem.

In a public/private key pair cryptosystem, a unique public key is generated from a private key using a mathematical technique that is extremely difficult, and practically impossible, to apply in reverse. That is, knowledge of the public key does not facilitate the determination of the private key in a public/private key pair. The public/private key pairs are employed in a corresponding encryption system in such a way that a document, or message, that is encrypted using one of the keys can only be decrypted by the other key. (For the purposes of this document, it is assumed that encrypted messages cannot be decrypted without an appropriate key, even though there may be some finite mathematical possibility that the message may be decrypted by someone without the authorized key.) A public/private key system is termed an asymmetric encryption system, in contrast to a symmetric system, such as Data Encryption Standard (DES) published by the U.S. National Institute of Standards and Technology, wherein the same key is used to encrypt and decrypt a message. Another asymmetric key system common in the art is the ElGamal system, and other symmetric key encryption systems include the IDEA system and the Blowfish system.

In operation, a user of the cryptosystem is assigned a public and private key of a key pair. As its name implies, the public key is intended to be distributed freely by the user, while the private key is intended to be kept secret by the user. When another person wants to send a secure message to the user, the other person encrypts the message using the user's public key, and then sends the encrypted message to the user. The user decrypts the encrypted message using the user's private key. Because the encrypted message cannot be decrypted without the private key, the encrypted message can be communicated openly, without fear of being readable by anyone other than the user, assuming that the user has kept the private key secure. If the other person wants to send the same message to multiple users, the other person creates multiple encryptions of the message, using each user's public key.

Another use of a public and private key pair is authentication. Authentication is a means for verifying the sender of a message. A message is authenticated by encrypting the message using the sender's private key. When the message is received, the recipient decrypts the message using the sender's public key. Because the sender's public key can only decrypt a message that is encoded using the sender's private key, a successful decryption of the message is an authentication of the sender of the message, assuming that the sender has kept the private key secure.

An alternative authentication method is to encrypt a unique characteristic of the message using the user's private key. The unique characteristic is a characteristic that changes whenever any changes are made to the message. The user sends the message and encrypted characteristic to another person. The other person applies the sender's public key to the encrypted characteristic. If the decrypted characteristic matches the unique characteristic of the message, the message is verified as having come from the sender, assuming again that the sender has kept the private key secure.

Although the use of a public/private key pair encryption system provides for a high level of security, the security is highly dependent upon the security measures employed to keep each user's private key secure. Of particular concern are the processes with which the private key is created, distributed, stored, and retrieved. To assure that the private key is not discemable from the public key, the public and private keys are conventionally very large numbers; for example, RSA utilizes as many as 200 digits. UK Patent Application, "Data communications using public key cryptography", UK serial number GB 2,318,486A, publication date 4/22/1998, filed 10/16/96 for C. J. Holloway, discloses a method for storing a user's private key on a server in an encrypted form, for subsequent retrieval and decryption by the user, but specifies that the private key should preferably be generated at the user's computer (a client processor in a client-server network), to limit the exposure of the private key. In general, the creation of a public/private key pair that is truly secure requires significant computational resources, and a source of a truly random number. To avoid the cost and loss of control that may result by enabling each user in a networked environment to create a public/private key pair, the public/private key pairs are typically generated by an administrator of the network using, for example, a dedicated processor that is physically isolated from the network or other systems. Using this approach, a public/private key pair is distributed to each new user via a secure delivery means, such as a hand-delivered document or diskette containing the public/private key pair. Although less costly than providing the resources to enable each user to generate a public/private key pair directly, the hand-delivery distribution system is awkward, but heretofore required, particularly in a networked environment wherein the communication paths are susceptible to unauthorized or inappropriate monitoring.

An object of this invention is to provide a method and device for generating a public/private key pair at a client processor that does not require substantial computing resources. A further object of this invention is to provide a method and device for generating a public/private key pair at a client processor that allows for a shared source of truly random numbers. A further object of this invention is to provide a method and device for generating a public/private key pair at a client processor in a client-server network that utilizes the resources of the server processor without compromising the security of the public/private key pair.

These objects and others are achieved by providing a client processor that receives parameters from a server processor that facilitate the generation of a public/private key pair at the client processor the parameters being at least one of: a truly random number and a prime number. The server processor provides one or more of the parameters that are required to generate a public/private key pair. Preferably, the provided parameters include the cryptographic parameter values that are computationally difficult to compute, determine, or verify. In this manner, the cryptographic strength of the public/private key pair can be dependent upon the resources available to the server processor, rather than the resources available at each client processor.

The invention is explained in further detail, and by way of example, with reference to the accompanying drawings wherein:
FIG. 1 illustrates an example networked computer system comprising a server and multiple clients.
FIG. 2 illustrates an example client processor that generates a public/private key pair in accordance with this invention.

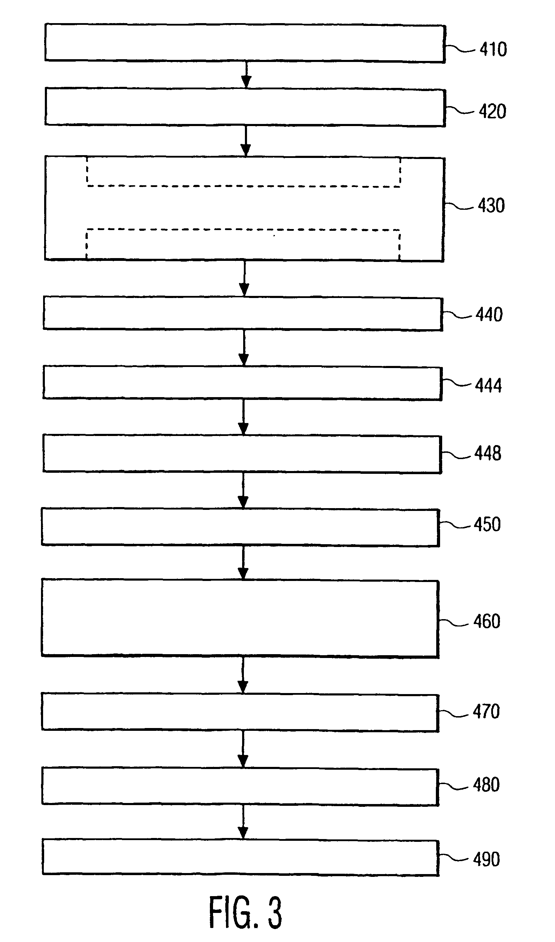

FIG. 3 illustrates an example flow diagram for generating a public/private key pair at a client processor in accordance with this invention.

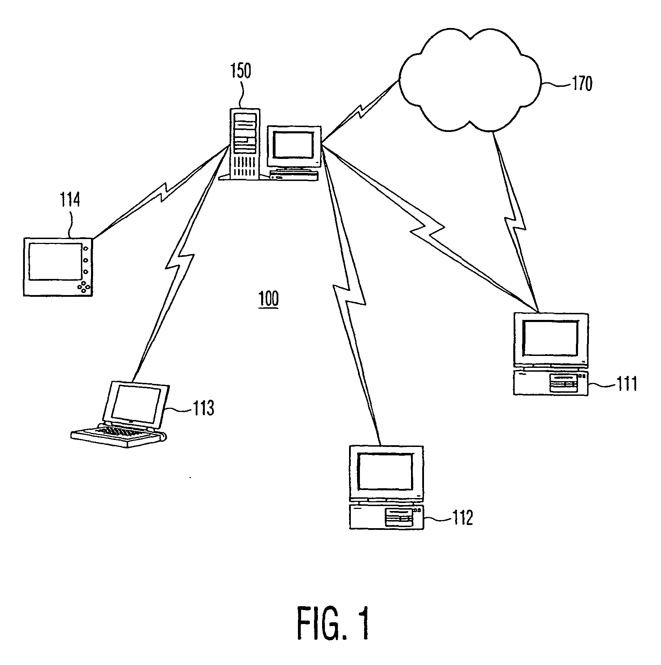

FIG. 1 illustrates a network system 100 comprising a server processor 150 and client processors 111-114. Each of the client processors 111-114 communicate with the server processor 150, and may communicate to other networks 170 as well. The network system 100 may be a local area network, a home control network, a private network, a public network, such as the Internet, and so on. Client-server networks offer significant advantages, typically in the area of resource utilization. For ease of understanding, a corporate network will hereinafter be used as a paradigm for a network system. Consider the addition of a new user of client processor 111 to the network, as when a new employee joins the corporate organization. Conventionally, as discussed above, an administrator generates a public/private key pair for the new employee on a secure processor, and delivers a diskette to the new employee containing the allocated public/private key pair, because the communications path between the server processor 150 and the client processor 111 is not secure, and because the cost of providing the resources required to generate a truly secure public/private key pair at the client processor 111 is excessive.

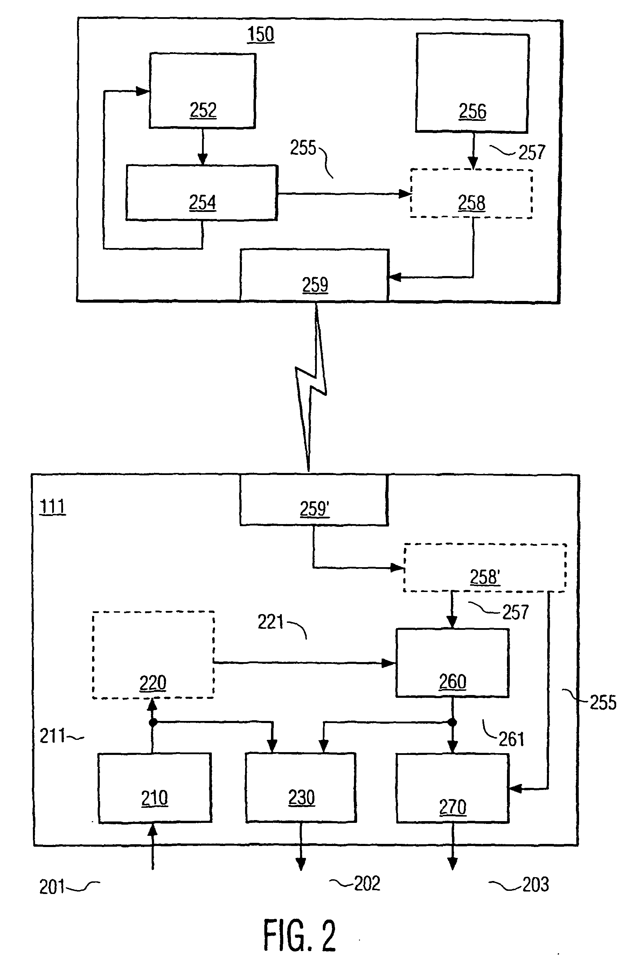

FIG. 2 illustrates an example client processor 111 that operates in conjunction with an example server processor 150 to provide a truly secure public/private key pair at the client processor. Truly secure implies that the parameters that are used to generate the public/private key pair conform to the mathematical criteria upon which the cryptosystem is based. For example, some cryptosystem algorithms, such as RSA and ElGamal, require the use of a very large prime number having particular characteristics. Generating a large prime number is not a simple task, nor is the task of verifying that the number that is generated has the desired characteristics. In other cases, some cryptosystem algorithms require the use of a large random number, and to be truly secure, require that this large random number be truly random. Most computer generated random numbers, however, are pseudo-random numbers, meaning that the knowledge of one or more prior generated random numbers from the generator, or the seed value used by the generator, will facilitate the determination of a subsequently generated random number from the generator.

To optimize the use of resources in a preferred embodiment, the resources required to generate the costly-to-produce parameters for the intended cryptosystem are located at the example server processor 150, or at another processor (not shown) that is accessible by the server processor 150. Illustrated in the example server processor 150 of FIG. 2 are a factor generator 252 and verifier 254 that produce one or more parameters p 255, and a random number generator 256 that produces a random number K 257. The factor generator 252 and verifier 254 are presented as a paradigm for any generator of parameters that may be required to effect the generation of a truly secure public/private key pair. The random number K 257 in this example is merely another cryptosystem parameter, and the random number generator 256 is presented as a paradigm for any special purpose device that may be required to produce particular parameters. The parameters p 255, K 257 are communicated to the client processor 111 via communicators 259, 259', and are optionally encrypted 258 at the server processor 111 and decrypted 258' at the client processor 111 using encryption and decryption techniques that are common in the art.

The example client processor 111 includes a private key generator 260 and a public key generator 270 that use the communicated parameters p 255, K 257 from the server 150, as required. The private key generator 260 generates a private key x 261 that is a function of the random number K 257 and another number N. Although most cryptosystem algorithms can generate a private key directly from a random number, or can use the random number itself as the private key, the random number K 257 is perturbed by another number N in a preferred embodiment in order to isolate the generation of the private key from the server 150, as well as from anyone who could have monitored the generation or transmission of K 257. That is, for example, although the administrator of the system that generates the random number K 257 should be trustworthy, the security of the private key x 261 is greatly enhanced if the knowledge of the random number K 257 provides little or no guidance for determining x 261.

The public key generator 270 generates a public key y 203 from the private key 261 using the parameters p 255 that were provided by the server processor 150. In general, knowledge of parameters other than the ones used to generate the private key are of little or no use in determining the private key. Thus, the parameters p 255 from the server processor 150 are used directly by the public key generator 270 in a preferred embodiment. As would be evident to one of ordinary skill in the art, if the knowledge of the parameters p 255 facilitate the determination of the private key x 261, the parameters p 255 should be communicated in an encrypted form from the server processor 150, or perturbed in the client processor 111 before use in the public key generator 270.

To preserve the security of the private key x 261, it is subsequently encrypted, using a hash 210 value of a key U 201 that is specific to the new user. The hash function 210 transforms the key U 201 into a form S 211 that is suitable for use as an encryption key. For example, the user key U 201 may be a large number, whereas the encrypter 230 may be a DES cryptosystem that uses a fifty-six bit key value to effect an encryption. After encryption using the hashed value S, the private key x 261 is then erased from the client processor.

The key U 201 that is used to encrypt the private key x 261 may be a biometric key, based for example on a finger print or retina print of the new user. Copending patent application EP-A-1 057 145, published 06.12.2000, entitled "Biometric Identification Mechanism That Preserves the Integrity of the Biometric Information", discloses a technique for securely communicating biometric information. The key U 201 may be based on a password or passphrase created by the user that is easier to remember than, for example, a two-hundred-digit RSA private key x 261. A symmetric encryption is used in the encrypter 230, so that the same biometric data, or memorized password or passphrase, can be used to decrypt the private key x 261 whenever necessary, assuming the use of the same hash function 210. In a preferred embodiment, the encrypted private key z 202 is stored at the server processor, thereby allowing for a subsequent retrieval of the encrypted private key 202 by the user from any other client processor 112-114, whenever the private key is required.

This same user key U 201 is used in a preferred embodiment as the basis for generating the aforementioned number N that modifies the random number K 257. Illustrated in FIG. 2 is a pseudo-random number generator 220 that generates a random number N using the hash value 211 of the user key U 201 as a seed. Although this random number N may be determinable based on a knowledge of prior values produced by the pseudo-random number generator 220, such a determination in this example would require a knowledge of the hash value of the user key U 201 that was used as a seed in this process.

Not illustrated, the public key y 202 and the corresponding encrypted key z 203 are transmitted for storage in a list of keys at the server processor 150, along with an identification of the new user corresponding to this key-pair. In this manner, when another user of the network desires to send a secure communication to the new user, the other user can access the list of keys to obtain the new user's public key y 202, and encrypt the communication accordingly. Upon receipt of the encrypted communication, the user can retrieve the user's encrypted private key and apply a decryption based on the user's key U 201 to obtain the private key x 261 that is required to decrypt the encrypted communication.

FIG. 4 illustrates an example flow diagram, using an example ElGamal cryptosystem model, for generating a public/private key pair in accordance with this invention. The cryptosystem parameters p are generated at block 410, and the example true random number K at block 420. As noted above, for a truly secure public/private key pair, the parameters used in a cryptosystem, including the random number, have certain criteria, and are typically subjected to a series of tests to verify their suitability as cryptological parameters. These operations are performed at the server processor, or at another processor with which the server processor has access. These parameters are communicated to the client processor 430, optionally in an encrypted form. At 440, the user key U is obtained, and at 444 it is hashed to produce a symmetric key S that will be used, at 470, to encrypt the private key x.. At 448, the key S is used as a seed to a pseudo-random number generator to produce a random number N that is used to modify the random number K, as discussed above.

In a preferred embodiment, an exclusive-or function combines the random number K and the random number N to form the private key x, at 450. The exclusive-or function has the desired property of propagating the true random nature of an input variable to the resultant value x. That is, a knowledge of N provides no guidance for the determination of x. At 460, the private key x and the parameters p are used to generate the public key y. Using the example ElGamal cryptosystem, the public key y is computed as y = (p₁)^{x} mod p₂.

The private key x is encrypted using the symmetric key S, at 470, and removed from the client processor memory, at 480. The random numbers K and N, and the symmetric key S are also removed from the client memory at 480. The resultant encrypted private key Eₛ(x), the corresponding public key y, and an identifying user ID, are communicated to the server processor to facilitate access by others to the user's public key y, and access by the user to the user's encrypted key Eₛ(x).

The foregoing merely illustrates the principles of the invention. It will thus be appreciated that those skilled in the art will be able to devise various arrangements which, although not explicitly described or shown herein, embody the principles of the invention.

For example, the methods presented herein provide for a high level of security in the generation of a public/private key pair on a client processor. Alternative methods would be evident to one of ordinary skill in the art in view of this invention, albeit perhaps with a lower level of security. For example, the step of mixing of the random number K with another random number could be skipped, but in that case a knowledge of K could be used to determine the private key x. In like manner, the random number N that is mixed with the random number K is illustrated as being dependent upon the hash of the user key U, although it could be independently generated. Similarly, some of the cryptosystem parameters could be generated at the client processor. If, for example, a source of a true random number K is not available at the server processor, but the source of large prime numbers having desirable characteristics is available at the server processor, then only the parameters p 255 would be generated at and communicated from the server processor. In this case, the use of a pseudo-random number K' that is generated at the client processor would provide a more secure process than the use of a pseudo-random number K' that is communicated from the server processor. These and other customizations and optimizations would be evident to one of ordinary skill in the art.

## Claims

1. A system including a server processor (150) and a client processor (111); the server processor (150) comprising:
a parameter generator (252, 256) for generating at least one cryptosystem parameter (255, 257), and
a communicator (259) for communicating the at least one cryptosystem parameter (255, 257) to the client processor (111); and
the client processor (111) comprising:
a communicator (259') for receiving the least one cryptosystem parameter (255, 257) from the server processor (150);
**characterized**
**in that** the at least one cryptosystem parameter (255, 257) includes at least one of a truly random number and a prime number; and
**in that** the client processor (111) comprises a key generator (260, 270) for generating at least one of a public key (203) and a private key (261) of a public-key pair based on the at least one cryptosystem parameter (255, 257).

2. The system of claim 1, wherein the client processor (111) further includes:
an encrypter (230) for generating an encrypted private key (202) based on the private key (261) and a user key (201), and
wherein the communicator (259') is operative to communicate the public key (203) and the encrypted private key (202) to the server processor (150) to facilitate a subsequent retrieval of the encrypted private key (202); and
wherein the server processor (150) further includes:
a storage device that stores the public key (203) and an encrypted private key (202) corresponding to a user, and
wherein the communicator (259) is further configured to enable a communication of the encrypted private key (202) to another client processor (112) upon request, to facilitate a decryption of the encrypted private key (202) by the user.

3. A system of claim 1, wherein the at least one cryptosystem parameter (255, 257) is an operational parameter of at least one of: a EIGamal cryptosystem and an RSA cryptosystem, and
wherein the key generator (260, 270) includes at least one of: an ElGamal cryptosystem and an RSA cryptosystem.

4. A system of claim 1 wherein the client processor (111) further includes means for removing the private key (261) from the client processor (111).

5. A client processor (111) comprising a communicator (259') for receiving at least one cryptosystem parameter (255, 257) from a server processor (150),
**characterized in that** the at least one cryptosystem parameter (255, 257) includes at least one of: a truly random number and a prime number; and
**in that** the client processor (111) comprises a key generator (260, 270) for generating at least one of a public key (203) and a private key (261) of a public-key pair based on the at least one cryptosystem parameter (255, 257).

6. The client processor (111) of claim 5, further including
an encrypter (230) for generating an encrypted private key (202) based on the private key (261) and a user key (201), wherein
the communicator (259') is operative to communicate the public key (203) and the encrypted private key (202) to the server processor (150) to facilitate a subsequent retrieval of the encrypted private key (202).

7. The client processor (111) of claim 5, wherein the at least one cryptosystem parameter (255, 257) is an operational parameter of at least one of: a ElGamal cryptosystem and an RSA cryptosystem, and
wherein the key generator (260, 270) includes at least one of: an ElGamal cryptosystem and an RSA cryptosystem.

8. The client processor (111) of claim 5, further including means for removing the private key (261) from the client processor (111).

9. A method of generating a key in a client-server environment, comprising
producing (410, 420) at least one cryptosystem parameter (255, 257) at a server processor (150), and
communicating (430) the at least one cryptosystem parameter (255, 257) to a client processor (111),
**characterized in that** the at least one cryptosystem parameter (255, 257) includes at least one of: a truly random number and a prime number, and
**in that** the method includes generating (450, 460) at the client processor at least one of a public key (203) and a private key (261) based on the at least one cryptosystem parameter (255, 257).

10. The method of claim 9, further including:
encrypting (470) the private key (261) at the client processor (111) based on a user key (201) to produce an encrypted private key (202),
removing (480) the private key (261) from the client processor (111),
communicating (490) the public key (203) and the encrypted private key (202) to the server processor (150).

11. The method of claim 10, further including:
communicating the encrypted private key (202) to an other client processor (112), and
decrypting the encrypted private key (202) based on the user key (201).

12. The method of claim 10, wherein the at least one cryptosystem parameter (255, 257) is an operational parameter of at least one of: a ElGamal cryptosystem and an RSA cryptosystem, and
wherein the generating of at least one of the public key (203) and the private key (261) includes the generation of at least one of: an ElGamal key-pair and an RSA key-pair. .

13. A computer readable medium comprising a computer program for causing a client processor (111) in a client-server system to carry out the steps of:
receiving (259') at least one cryptosystem parameter (255, 257) from a server processor (150), wherein the at least one cryptosystem parameter (255, 257) includes at least one of: a truly random number and a prime number; and
creating (260, 270) at least one of a private key (261) and a public key (203) of a key-pair based on the at least one cryptosystem parameter (255, 257).

14. The computer readable medium of claim 13, wherein the computer program is further operative to cause the client processor (111) to carry out the steps of:
encrypting (230) the private key (261) based on a user key (201) to produce an encrypted private key (202), and
communicating (259') the public key (203) and the encrypted private key (202) to the server processor (150).

15. The computer readable medium of claim 13, wherein the step of creating the at least one of the public key (203) and the private key (261) includes generating at least one of: an ElGamal key-pair and an RSA key-pair.

## Patentansprüche

1. System mit einem Serverprozessor (150) und einem Kundenprozessor (111); wobei der Serverprozessor (150) die nachfolgenden Elemente umfasst:
- einen Parametergenerator (252, 256) zum Erzeugen wenigstens eines Schlüsselsystemparameters (255, 257), und
- einen Kommunikator (259) um den wenigstens einen Schlüsselsystemparameter (255, 257) dem Kundenprozessor (111) mitzuteilen, und
wobei der Kundenprozessor (111) die nachfolgenden Elemente umfasst:
- einen Kommunikator (259') zum Empfangen den wenigstens einen Schlüsselsystemparameter (255, 257) von dem Serverprozessor (150),
**dadurch gekennzeichnet, dass**
der wenigstens eine Schlüsselsystemparameter (255, 257) wenigstens eine wirklich beliebige Zahl oder eine Primzahl enthält; und
der Kundenprozessor (111) einen Schlüsselgenerator (260, 270) enthält zum Erzeugen wenigstens eines öffentlichen Schlüssels (203) oder eines geheimen Schlüssels (261) eines öffentlichen/geheimen Schlüsselpaares, und zwar auf Basis des wenigstens einen Schlüsselsystemparameters (255, 257).

2. System nach Anspruch 1, wobei der Kundenprozessor (111) weiterhin die nachfolgenden Elemente umfasst:
- einen Verschlüssler (230) zum Erzeugen eines verschlüsselten Geheimschlüssels (202) auf Basis des geheimen Schlüssels (261) und eines Benutzerschlüssels (201), und
wobei der Kommunikator (259') den öffentlichen Schlüssel (203) und den verschlüsselten geheimen Schlüssel (202) dem Serverprozessor (150) mitteilt um ein nachfolgendes Auffinden des verschlüsselten geheimen Schlüsseln (202) zu ermöglichen; und
wobei der Serverprozessor (150) weiterhin die nachfolgenden Elemente umfasst:
-- eine Speicheranordnung, die den öffentlichen Schlüssel (203) und einen verschlüsselten geheimen Schlüssel (202) entsprechend einem Benutzer speichert, und
wobei der Kommunikator (259) weiterhin dazu vorgesehen ist, auf Antrag eine Mitteilung des verschlüsselten geheimen Schlüssels (202) einem anderen Kundenprozessor (112) mitzuteilen, um eine Entschlüsselung des verschlüsselten geheimen Schlüssels (202) durch den Benutzer zu ermöglichen.

3. System nach Anspruch 1, wobei der wenigstens eine Schlüsselsystemparameter ein operationeller Parameter wenigstens von einem EIGamal Schlüsselsystems oder eines RSA Schlüsselsystems ist, und
wobei der Schlüsselgenerator (260, 270) wenigstens ein EIGamal Schlüsselsystem oder ein RSA Schlüsselsystem umfasst.

4. System nach Anspruch 1, wobei der Kundenprozessor (111) weiterhin Mittel aufweist zum Entfernen des geheimen Schlüssels (261) aus dem Kundenprozessor (111).

5. Kundenprozessor (111) mit einem Kommunikator (259') zum Empfangen wenigstens eines Schlüsselsystemparameters (155, 257) von einem Serverprozessor (150),
**dadurch gekennzeichnet, dass** der wenigstens eine Schlüsselsystemparameter (255, 257) wenigstens eine wirklich beliebige Zahl oder eine Primzahl enthält, und
dass der Kundenprozessor (111) einen Schlüsselgenerator (260, 270) aufweist zum Erzeugen wenigstens eines öffentlichen Schlüssels (203) oder eines geheimen Schlüssels (261) eines öffentlichen Schlüsselpaares auf Basis des wenigstens einen Schlüsselsystemparameters (255, 257).

6. Kundenprozessor (111) nach Anspruch 5, der weiterhin Folgendes umfasst:
- einen Verschlüssler (230) zum Erzeugen eines verschlüsselten geheimen Schlüssels (202) auf Basis des geheimen Schlüssels (261) und eines Benutzerschlüssels (201), wobei
der Kommunikator (259') den öffentlichen Schlüssel (203) und den verschlüsselten geheimen Schlüssel (202) dem Serverprozessor (150) mitteilt um ein nachfolgendes Auffinden des verschlüsselten geheimen Schlüssels (202) zu ermöglichen.

7. Kundenprozessor (111) nach Anspruch 5, wobei der wenigstens eine Schlüsselsystemparameter (255, 257) ein operationeller Parameter von wenigstens einem EIGamal Schlüsselsystem oder einem RSA Schlüsselsystem ist, und
wobei der Schlüsselgenerator (260, 270) wenigstens ein EIGamal Schlüsselsystem oder ein RSA Schlüsselsystem umfasst.

8. Kundenprozessor (111) nach Anspruch 5, der weiterhin Mittel aufweist zum Entfernen des geheimen Schlüssels (261) aus dem Kundenprozessor (111).

9. Verfahren zum Erzeugen eines Schlüssels in einer Kundenserverumgebung, wobei dieses Verfahren die nachfolgenden Verfahrensschritte umfasst:
- das Erzeugen (410, 420) wenigstens eines Schlüsselsystemparameters (255, 257) an einem Serverprozessor (150), und
- das Mitteilen (430) des wenigstens einen Schlüsselsystemparameters (255, 257) an einen Kundenprozessor (111),
**dadurch gekennzeichnet, dass** der wenigstens eine Schlüsselsystemparameter (255, 257) wenigstens eine wirklich beliebige Zahl oder eine Primzahl enthält, und
dass das Verfahren auf Folgendes umfasst: das Erzeugen (450, 460) wenigstens eines öffentlichen Schlüssels (203) oder eines geheimen Schlüssels (261) in dem Kundenprozessor, und zwar auf Basis wenigstens eines Schlüsselsystemparameters (255, 257).

10. Verfahren nach Anspruch 9, wobei dieses Verfahren weiterhin Folgendes umfasst:
- das Verschlüsseln (470) des geheimen Schlüssels (261) in dem Kundenprozessor (111) auf Basis eines Benutzerschlüssels (201) zum Erzeugen eines verschlüsselten geheimen Schlüssels (202),
- das Entfernen (480) des geheimen Schlüssels (261) aus dem Kundenprozessor (111),
- das Mitteilen (490) des öffentlichen Schlüssels (203) und des verschlüsselten geheimen Schlüssels (202) an den Serverprozessor (150).

11. Verfahren nach Anspruch 10, wobei dieses Verfahren weiterhin Folgendes umfasst:
- das Mitteilen des verschlüsselten geheimen Schlüssels (202) an einen anderen Kundenprozessor (112) und
- das Entschlüsseln des verschlüsselten geheimen Schlüssels (202) auf Basis des Benutzerschlüssels (201).

12. Verfahren nach Anspruch 10, wobei der wenigstens eine Schlüsselsystemparameter (255, 257) ein operationeller Parameter von wenigstens einem ElGamal Schlüsselsystem oder einem RSA Schlüsselsystem ist, und
wobei das Erzeugen wenigstens des öffentlichen Schlüssels (203) oder des geheimen Schlüssels die Erzeugung wenigstens eines EIGamal Schlüsselpaares oder eines RSA Schlüsselpaares ist.

13. Mit einem Computer auslesbares Medium mit einem Computerprogramm um dafür zu sorgen, dass ein Kundenprozessor (111) in einem Kundenserversystem die nachfolgenden Verfahrensschritte durchführt:
- das Empfangen (259') wenigstens eines Schlüsselsystemparameters (255, 257) aus einem Serverprozessor (150), wobei der wenigstens eine Schlüsselsystemparameter (255, 257) wenigstens eine wirklich beliebige Zahl oder eine Primzahl enthält, und
- das Erzeugen (260, 270) wenigstens eines geheimen Schlüssels (261) oder eine öffentlichen Schlüssels (203) eines Schlüsselpaares auf Basis von wenigstens einem Schlüsselsystemparameter (255, 257).

14. Mit einem Computer auslesbares Medium nach Anspruch 13, wobei das Computerprogramm weiterhin dazu vorgesehen ist, dafür zu sorgen, dass der Kundenprozessor (111) die nachfolgenden Verfahrensschritte durchführt:
- das Verschlüsseln (230) des geheimen Schlüssels (261) auf Basis eines Benutzerschlüssels (201) zum Erzeugen eines verschlüsselten geheimen Schlüssels (202), und
- das Mitteilen (259') des öffentlichen Schlüssels (203) und des verschlüsselten geheimen Schlüssels (202) an den Serverprozessor (150).

15. Mit einem Computer auslesbares Medium nach Anspruch 13, wobei der Verfahrensschritt der Erzeugen des wenigstens einen öffentlichen Schlüssels (203) und des geheimen Schlüssels (261) das Erzeugen wenigstens eines EIGamal Schlüsselpaares oder eines RSA Schlüsselpaares umfasst.

## Revendications

1. Système comprenant un processeur serveur (150) et un processeur client (111), le processeur serveur (150) comprenant :
un générateur de paramètres (252, 256) pour générer au moins un paramètre de système cryptographique (225, 257), et
un communicateur (259) pour communiquer le au moins un paramètre de système cryptographique (255, 257) au processeur client (111), et
le processeur client (111) comprenant :
un communicateur (259') pour recevoir le au moins un paramètre de système cryptographique (255, 257) venant du processeur client (150);
**caractérisé :**
**en ce que** le au moins un paramètre de système cryptographique (255, 257) comprend au moins : un nombre vraiment aléatoire et/ou un nombre premier, et
**en ce que** le processeur client (111) comprend un générateur de clés (260, 270) pour générer au moins une clé publique (203) et/ou une clé privée (261) d'une paire de clés publique/privée sur la base du au moins un paramètre de système cryptographique (255, 257).

2. Système suivant la revendication 1, dans lequel le processeur client (111) comprend en outre :
une unité de chiffrement (230) pour générer une clé privée chiffrée (202) sur la base de la clé privée (261) et d'une clé d'utilisateur (201), et
dans lequel le communicateur (259') sert à transmettre la clé publique (203) et la clé privée chiffrée (202) au processeur serveur (150) pour faciliter une extraction ultérieure de la clé privée chiffrée (202), et
dans lequel le processeur serveur (150) comprend en outre :
un dispositif de stockage dans lequel sont stockées la clé publique (203) et une clé privée chiffrée (202) correspondant à un utilisateur, et
dans lequel le communicateur (259) est en outre configuré pour permettre une transmission de la clé privée chiffrée (202) à un autre processeur client (112) sur demande, pour faciliter un déchiffrement de la clé privée chiffrée (202) par l'utilisateur.

3. Système suivant la revendication 1, dans lequel le au moins un paramètre de système cryptographique (255, 257) est un paramètre opérationnel d'au moins : un système cryptographique ElGamal et/ou un système cryptographique RSA, et
dans lequel le générateur de clés (260, 270) comprend au moins : un système cryptographique ElGamal et/ou un système cryptographique RSA.

4. Système suivant la revendication 1 dans lequel le processeur client (111) comprend en outre des moyens permettant d'extraire la clé privée (261) du processeur client (111).

5. Processeur client (111) comprenant un communicateur (259') pour recevoir au moins un paramètre de système cryptographique (255, 257) venant d'un processeur client (150);
**caractérisé en ce que** le au moins un paramètre de système cryptographique (255, 257) comprend au moins : un nombre vraiment aléatoire et/ou un nombre premier, et
**en ce que** le processeur client (111) comprend un générateur de clés (260, 270) pour générer au moins une clé publique (203) et/ou une clé privée (261) d'une paire de clés publique/privée sur la base du au moins un paramètre de système cryptographique (255, 257).

6. Processeur client (111) suivant la revendication 5, comprenant en outre
une unité de chiffrement (230) pour générer une clé privée chiffrée (202) sur la base de la clé privée (261) et d'une clé d'utilisateur (201), dans lequel
le communicateur (259') sert à transmettre la clé publique (203) et la clé privée chiffrée (202) au processeur serveur (150) pour faciliter une extraction ultérieure de la clé privée chiffrée (202).

7. Processeur client (111) suivant la revendication 5, dans lequel le au moins un paramètre de système cryptographique (255, 257) est un paramètre opérationnel d'au moins : un système cryptographique ElGamal et/ou un système cryptographique RSA, et
dans lequel le générateur de clés (260, 270) comprend au moins : un système cryptographique ElGamal et/ou un système cryptographique RSA.

8. Processeur client (111) suivant la revendication 5, comprenant en outre des moyens permettant d'extraire la clé privée (261) du processeur client (111).

9. Procédé permettant de générer une clé dans un environnement client-serveur, comprenant les étapes suivantes :
la production (410, 420) d'au moins un paramètre de système cryptographique (255, 257) au niveau d'un processeur serveur (150), et
la transmission (430) du au moins un paramètre de système cryptographique (255, 257) à un processeur client (111);
**caractérisé en ce que** le au moins un paramètre de système cryptographique (255, 257) comprend au moins : un nombre vraiment aléatoire et/ou un nombre premier, et
**en ce que** le procédé comprend la génération (450, 460) au niveau du processeur client d'au moins une clé publique (203) et/ou d'une clé privée (261) sur la base du au moins un paramètre de système cryptographique (255, 257).

10. Procédé suivant la revendication 9, comprenant en outre les étapes suivantes :
le chiffrement (470) de la clé privée (261) au niveau du processeur client (111) sur la base d'une clé d'utilisateur (201) pour produire une clé privée chiffrée (202);
l'extraction (480) de la clé privée (261) du processeur client (111);
la transmission (490) de la clé publique (203) et de la clé privée chiffrée (202) au processeur serveur (150).

11. Procédé suivant la revendication 10, comprenant en outre les étapes suivantes :
la transmission de la clé privée chiffrée (202) à un autre processeur client (112), et
le déchiffrement de la clé privée chiffrée (202) sur la base de la clé d'utilisateur (201).

12. Procédé suivant la revendication 10, dans lequel le au moins un paramètre de système cryptographique (255, 257) est un paramètre opérationnel d'au moins : un système cryptographique ElGamal et/ou un système cryptographique RSA, et
dans lequel la génération de la clé publique (203) et/ou de la clé privée (261) comprend la génération d'au moins : une paire de clés ElGamal et/ou une paire de clés RSA.

13. Support lisible par ordinateur comprenant un programme informatique pour amener un processeur client (111) dans un système client-serveur à exécuter les étapes suivantes :
la réception (259') d'au moins un paramètre de système cryptographique (255, 257) venant d'un processeur serveur (150), dans lequel le au moins un paramètre de système cryptographique (255, 257) comprend au moins : un nombre vraiment aléatoire et/ou un nombre premier, et
la création (260, 270) de la clé privée (261) et/ou d'une clé publique (203) d'une paire de clés sur la base du au moins un paramètre de système cryptographique (225, 257).

14. Support lisible par ordinateur suivant la revendication 13, dans lequel le programme informatique sert en outre à amener le processeur client (111) à exécuter les étapes suivantes :
le chiffrement (230) de la clé privée (261) sur la base d'une clé d'utilisateur (201) pour produire une clé privée chiffrée (202), et
la transmission (259') de la clé publique (203) et de la clé privée chiffrée (202) au processeur serveur (150).

15. Support lisible par ordinateur suivant la revendication 13, dans lequel l'étape de création de la clé publique (203) et/ou de la clé privée (261) comprend la génération d'au moins : une paire de clés ElGamal et/ou une paire de clés RSA.
